# EUROPEAN PATENT SPECIFICATION

(11) **EP 1 070 290 B1**
(45) Date of publication and mention of the grant of the patent: **07.01.2015**
(21) Application number: 98906484.5
(22) Date of filing: 12.02.1998
(51) Int. Cl.: G06F 17/30

(54) **NETWORK IMAGE VIEW SERVER USING EFFICIENT CLIENT-SERVER, TILING AND CACHING ARCHITECTURE**
BILDBETRACHTUNGS-NETZWERKSERVER MIT EFFIZIENTEN KUNDENSERVER, DATENSEITEN UND CACHEARCHITEKTUR
SERVEUR DE VISUALISATION D'IMAGES EN RESEAU UTILISANT UN SERVEUR CLIENT EFFICACE, UNE ARCHITECTURE EN MOSAIQUE ET A CONCEPT D'ANTEMEMOIRE

(43) Date of publication of application: 24.01.2001
(73) Proprietor: E-Plus Capital Inc., Herndon VA 20170 (US)
(72) Inventor: HORNBACKER, Cecil, V., III, Apopka, FL 32712 (US); CRONIN, John, C., Alexandria, Virginia 22314 (US)
(74) Representative: Hertz, Oliver
(86) International application number: PCT/US1998/003017
(87) International publication number: WO 1999/041675

(56) References cited:
- EP-A- 0 967 556
- US-A- 5 555 101
- US-A- 5 615 325
- US-A- 5 666 490
- US-A- 5 701 451
- US-A- 5 708 825
- US-A- 5 740 425
- US-A- 5 745 109
- MEYER E A ET AL: "Borealis Image Server" COMPUTER NETWORKS AND ISDN SYSTEMS, NORTH HOLLAND PUBLISHING. AMSTERDAM, NL, vol. 28, no. 11, May 1996 (1996-05), pages 1123-1137, XP004018214 ISSN: 0169-7552
- CURRY C: "Making A Clickable Image Map" N.A., May 1995 (1995-05), XP002235112
- "VIRTUAL IMAGE EDITING" IBM TECHNICAL DISCLOSURE BULLETIN, IBM CORP. NEW YORK, US, vol. 39, no. 8, August 1996 (1996-08), pages 93-96, XP000638148 ISSN: 0018-8689

## Description

### 1. Field of the Invention

This invention relates to workstation viewing images of digital documents stored on a network server and in particular to viewing large digital document images using a client-server architecture.

### 2. Description of the Prior Art

Current methods for viewing digital document images for workstations in a networked environment use proprietary workstation application software to access a network image file server. To view an image, the application software transfers a copy of the whole image file from the image file server to the networked client workstation This method has a number limitations including: inefficient use of the network; high software purchase cost per workstation; high software administrative cost per workstation; high computational demands on the workstation; proprietary software available only for limited workstation types. Some other network image viewers may provide viewing using more optimized image transmission protocols but only with proprietary protocols and proprietary workstation software.

CURRY C: "Making A Clickable Image Map" N.A., May 1995 (1995-05), XP002235112 presents a way to use a visual directory as a means for accessing underlying files or documents or images that relate to a place on the top level visual directory. The user is required to create a file that links areas on the initial image to the underlying files or documents. A clickable image map allows a user to click on any location of a graphic and receive more information in the form of an enlarged picture or a link to a uniform resource locator (URL). However, this prior art reference fails to disclose a grid of view tiles.

PERRY, H.: "Spaces between tiled gifs", retrieved from the internet: URL:http://groups.google.com/groups/ comp.infosystems.www.authoring.images/browse_thread/23b0ac047 b8740e8/6cfcf0bc11b29e0b, 18 March 1997 discusses the so-called tiling of graphics files.

Further, the tiling of graphics files is also discussed in PERRY, H.: "Spaces between tiled gifs", retrieved from the internet: URL:http://groups.google.com/group/ comp.infosystems.www.authoring.images/msg/c651277ebbf96807?hl =en&dmode=source, 18 March 1997.

RABINOVICH B. et al.: "Visualization of Large Terrains in Resource-Limited Computing Environments", Proceedings Visualization '97, 24 October 1997 discloses a software system supporting interactive visualisation of large terrains in an environment comprising a low-end client computer accessing a large terrain database server through a low-bandwidth network. The large terrain scene is stored on disk in the form of geometry information and texture tiles of fixed size. A low-end client computer loads only those texture tiles of the appropriate resolution which intersect the view footprint, if they are not yet loaded.

POTMESIL M.: "Maps Alive: viewing geospatial information on the WWW", Computer Networks and ISDN Systems 29 (1997) 1327-1342 discloses a WWW-based system for viewing geospatial information. The system comprises a 2D map browser capable of continuous scroll and zoom of an arbitrarily large sheet, which downloads and caches geographical information, geometrical models and URL anchors in small regions called tiles.

MEYER E. et al.: "Borealis Image Server" (COMPUTER NETWORKS AND ISDN SYSTEMS, NORTH HOLLAND PUBLISHING. AMSTERDAM, NL, vol. 28, no. 11, May 1996 (1996-05), pages 1123-1137, XP004018214 ISSN: 0169-7552.) discloses an image server for serving watermarked images to client web browsers. The server is programmed with web server software. The server receives requests from a client web browser in the form of an URL encoding an image name, output style such as thumb nail or full size, and optionally a graphic format. Upon receipt of a request, the server loads the file into memory, processes it, and delivers the resulting image to the browser. One of the output styles supported by the image server is the "info" output style. When an image is requested with output style "info", HTML code is returned to the browser defining a full HTML page consisting of the title of the image, an inlined thumbnail of the image which is a link to the full-sized image, and copyright and author/title information. However, the URL does not specify a view of the image file in terms of scale and region. Further, it is not disclosed that the web server determines an array of view tiles that corresponds to the requested view and creates the view tile images. Finally, it is not disclosed that the web server creates an HTML output file including appropriate formatting and references to the created view tile images.

Therefore, the system as disclosed in "Borealis Image Server" is not sufficiently efficient, which is especially important for viewing large images, i.e. images that cannot be displayed in full.

Therefore, it is an object of the invention to adapt the systems as disclosed in "Borealis Image Server" to allow efficient viewing of large images.

### SUMMARY OF THE INVENTION

This object is achieved by a computer network server according to claim 1.

The invention comprises a computer network server adapted to store digital document image files, programmed to receive requests from a client Web browser in URL code, the URL specifying a view which identifies an image file and format, to compose the requested view, and to transmit HTML code for the resultant view to the client Web browser to display.

The accompanying drawings, which are incorporated in and constitute a part of the specification, illustrate an embodiment of the invention and together with the general description, serve to explain the principles of the invention.

### BRIEF DESCRIPTION OF THE DRAWINGS

FIG. 1 is a diagram of the system architecture showing the relationship of the components of the system and the image view server.
FIG. 2 is a flow diagram of the steps performed by the system to request, compose and display a view of an image.
FIGS. 3A and 3B are diagrams that show the view tile grid as determined by the view scale.
FIGS. 4A and 4B are diagrams that show the grid view tiles composed for an initial image viewS and then for a shifted view of the image.
FIGS. 5A and 5B are diagrams that show the web browser display of view tiles for an initial view and then for a shifted view of the image that correspond to FIGS. 4A and 4B.
FIGS. 6A and 6B are diagrams that show view tiles pre-computed by the background view composer.
FIG. 7 is a high-level flow diagram of the foreground view composer.
FIG. 8 is a flow diagram for the view generator component of the view composer.

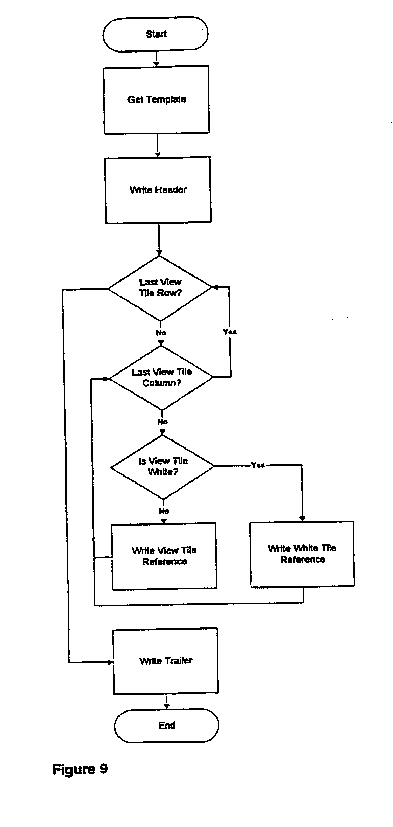

FIG. 9 is a flow diagram for the data output component of the view composer.
FIGS. 10A, 10B, and 10C together constitute a flow diagram for the view tile cache garbage collector.

### DETAILED DESCRIPTION OF THE INVENTION AND THE PREFERRED EMBODIMENTS

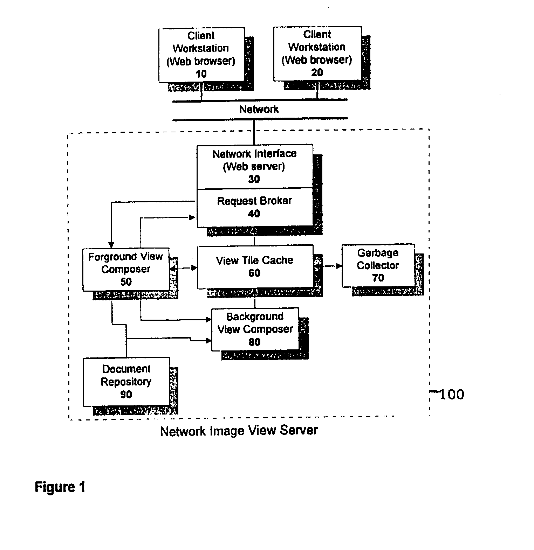

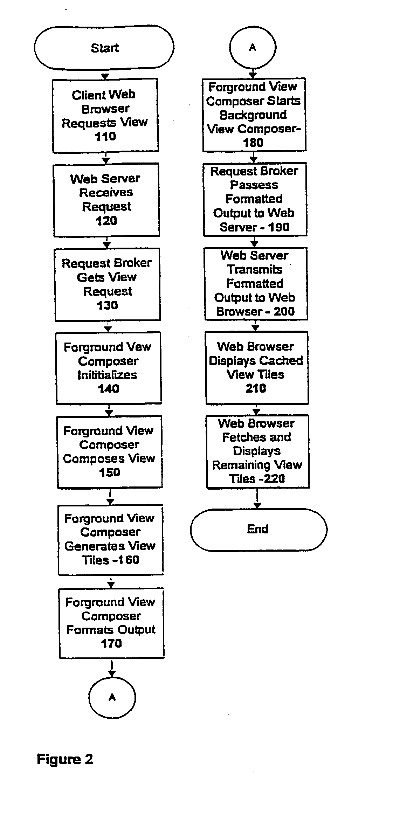

References will now be made in detail to the presently preferred embodiment of the invention, an example of which is illustrated in the accompanying drawings.
The preferred embodiment is a server PC consisting of an Intel Pentium Pro 200MHz processor, with at least 128MB of RAM, an Ultra-wide Fast SCSI disk controller with at least 4GB of hard disk space, and LAN/WAN/Internet network interface controllers. The server runs the Windows NT Server Version 4 operating system with NT File System, Microsoft Internet Information Server Version 3, and the network image server software. The server and client are configured with TCP/IP network protocols to support the HTTP (Web) protocol. No software other than a Web browser is required on the client. The preferred Web browser is Internet Explorer 3.0 or Netscape 3.0 or higher.
Referring first to FIG. 1, a network comprising client workstations 10 and 20 are connected through network connections to a network image view server 100 comprising a network server interface, preferably a web server 30 which uses the Hypertext Transfer Protocol (HTTP), a request broker 40, a foreground view composer 50, a view tile cache 60, a background view composer 80, a garbage collector 70, and a document repository 90 having image files.
The network image view server, i.e., client workstation, or "workstation," 100 can be implemented on a computer, for example a personal computer configured with a processor, I/O, memory, disk storage, and a network interface. The network image view server 100 is configured with a network server operating system and Web server software 30 to provide the network HTTP protocol link with the client workstations 10 and 20. Typical networks include many workstations served by one, and sometimes more than one, network server, the server functioning as a library to maintain files which can be accessed by the workstations.
In operation according to an embodiment of the method of the invention, using the Web browser software on the client workstation, a user requests an image view 110 (FIG. 2) having a scale and region specified by means of a specially formatted Uniformed Resource Locator (URL) code using HTTP language which the Web server can decode as a request to be passed to the image view composition software and that identifies the image file to be viewed, the scale of the view and the region of the image to view. The network image server sends HTML data to the client with pre-computed hyperlinks, such that following a hyperlink by clicking on an area of an image will send a specific request to the server to deliver a different area of the drawing or to change the resolution of the image. The resultant HTML from this request will also contain pre-computed hyperlinks for other options the user may exercise.
The code is sent over the network to the network server where the web server software interprets the request 120, passes the view request URL to the foreground view composer software through a common gateway interface (CGI) that is designed to allow processing of HTTP requests external to the Web server software, and thereby instructs the request broker 130 to get the particular requested view, having the scale and region called for by the URL.
The foreground view composer is initialized 140 and composes the requested view 150 after recovering it from memory on the network server. The foreground view composer software interprets the view request, computes which view tiles are needed for the view, creates the view tiles 160 needed for the view, and then creates Hypertext Markup Language (HTML) output file to describe the view composition to the Web browser, unless the necessary view tiles to fulfill the request are already computed and stored in cache memory of the workstation, in which case the already-computed tiles are recovered by the Web browser. In either case, the foreground view composer formats the output 170 and then intitializes backgound view composer 180 which passes the formatted output to the Web server, which in turn transmits the formatted output over the network to the Web browser 200 on the requesting workstation 10, where the requesting browser displays any view tiles already cached 210, combined with newly computed view tiles 220 which are fetched from the server.

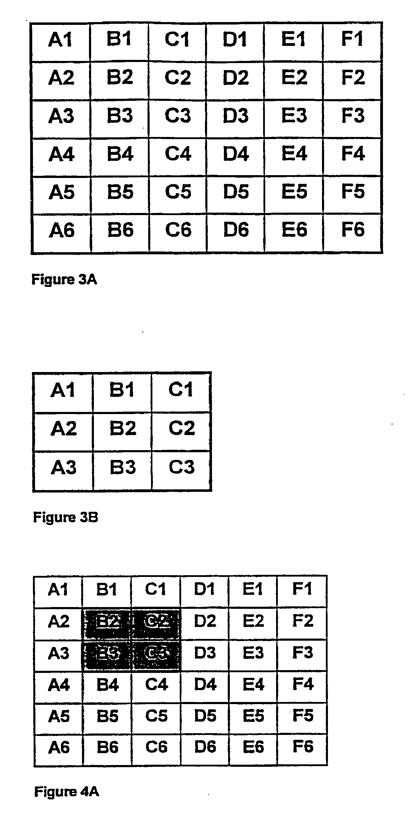

The generation of the view tiles 160 is handled by an image tiling routine which divides a given page, rendered as an image, into a grid of smaller images (FIG 3A) called view tiles A1, A2, B1, etc. (or just tiles in the image view server context). These tiles are computed for distinct resolutions (FIG 3B) of a given image at the server according to the URL request received from the browser software on the workstation. The use of tiling enables effective image data caching 60 at the image view server and by the browser 10at the client workstation.

The preferred view tile format is 128 pixel by 128 pixel GIF image files. The GIF image file format is preferred because of Web browser compatibility and image file size. The GIF image file format is the most widely supported format for graphical Web browsers and therefore gives the maximum client compatibility for the image view server. The GIF image format has the desirable properties of loss-less image data compression, reasonable data compression ratios, color and grayscale support, and a relatively small image file header, which relates to the selection of view tile size. With a raw image data size for monochrome view tiles of 2,048 bytes and a typical GIF compression of 4 to 1, the compressed data for a view tile is approximately 512 bytes. With many image file formats, such as TIFF and JPEG, the image file header (and other overhead information such as data indexes) can be as large or larger than the image data itself for small images such as the view tiles; whereas a GIF header for a monochrome image adds as little as 31 bytes to the GIF image file. Alternate view tile formats such as Portable Network Graphics (PNG) may be used, especially as native browser support for the format becomes common.

The 128 pixel view tile size is a good compromise between view tile granularity and view tile overhead. The view tile granularity of 128 pixels determines the minimum view shift distance (pan distance) that can be achieved with standard graphical Web browser and level 2 HTML formatting. This allows the adjustment of the view position on a 0.64 inch grid when viewing a 200 pixel-per-inch image at 1 to 1 scale. Reducing the size of the view tiles allows finer grid for view positioning, but has the problem that the view tile overhead becomes excessive.

A view tile typically represents more or less than 128 x 128 pixels of the image file. If the view being displayed is reduced 2 to 1, then each view tile will represent a 256 x 256 pixel area of the image file that has been scaled down to 128 x 128 pixels. For each possible scale factor there is an array of tiles to represent the view. Fixed size view tiling is beneficial because it allows more effective use of the caching mechanism at the server and at the client. For example, consider a view of 512 pixels by 512 pixels. Without tiling, this view is composed of a single GIF file that is displayed by the Web browser, and so if the user asks for the view to be shifted by 256 pixels, then a new GIF image of 512 x 512 pixels needs to be created and transmitted to the Web browser. With tiling, the first view would cause 16 view tiles to be computed and transmitted for display by the Web browser. When the request for the view to be shifted by 256 pixels is made, only 8 view tiles representing an area of 256 by 512 pixels need to be computed. In addition only the 8 new view tiles need to be transmitted to the Web browser since the shifted view will reuse 8 view tiles that are available from the Web browser cache. The use of tiling cuts the computation and data transmission in half for this example.

The use of view tiling also allows the image view server to effectively pre-compute view tiles that may be required by the next view request. The image view server background view composer computes view tiles that surround the most recent view request in anticipation a request for a shifted view. When the shifted view is requested, the foreground view composer can use the pre-computed view tiles and eliminate the time to compute new view tiles for the view. For frequently accessed images there is a good chance that the view tiles for a view may already exist in the view tile cache since the view tile cache maintains the most recently accessed view tiles. Since millions of view tiles may be created and eventually exceed the storage capacity of the image view server, the view tile cache garbage collector removes the least recently accessed view tiles in the case where the maximum storage allocation or minimum storage free space limits are reached.

The number of view tiles needed to render a given view size increases in inverse proportion to the square of the view tile size. A 64 pixel view tile would require 4 times as many view tiles to render the same view area, and so is less preferred. The view tile overhead exists as quantity of data and as the number of network transactions. The data quantity overhead comes from the image file header size as a proportion of the total image file size as described above and as data needed to make the view tile references in the HTML text file. The network transaction overhead increases with smaller view tiles since each of the view tiles requires a network transaction. The increased number of network transactions required with a smaller view tile size would slow the response to render a view.

The HTML output file produced by the foreground view composer is passed to the Web server software to be transmitted to the Web browser. The graphical Web browser serves as the image viewer by utilizing the HTML output from the image view server to compose and display the array of view tiles that form a view of an image. The HTML page data list the size, position and the hyperlink for each view tile to be displayed. The view tiles are stored in the GIF image file format that can be displayed by all common graphical Web browsers. The Web browser will retrieve each view tile to be displayed from a local cache if the view tile is present, otherwise from the image view server.

The request broker 40 takes the raw request from the network server interface 130, interprets the request, communicates with the other system components and determines what the appropriate response should be. It also determines when the response is returned. In the preferred embodiment the request broker is implemented with the Web server Common Gateway Interface (CGI). Options exist to use other direct Application Program Interfaces (API) to the Web server.

To support the tiling and caching of many images on the same image view server, each view tile must be uniquely identified for reference by the Web browser with a view tile URL. This uniqueness is accomplished through a combination of storage location and view tile naming. Uniqueness between images is accomplished by having a separate storage subdirectory in the view tile cache for each image. Uniqueness of view tiles for each scale of view is accomplished through the file name for each view tile. The view tile name is preferably of the following form:
V < SCALE > < TILE_NUMBER >. GIF

The < SCALE > value is a 2 character string formed from the base 36 encoding of the view scale number as expressed in parts per 256. The < TILE NUMBER > value is a 5 character string formed from the base 36 encoding of the tile number as determined by the formula:
TILE_NUMBER = TILE_ROW * IMAGE_TILE_WIDTH + TILE_COLUMN

The TILE_ROW and TILE_COLUMN values start at 0 for this computation. For example the second tile of the first row for a view scaled 2:1 would be named under the preferred protocol:
V3J00001.GIF

The full URL reference for the second tile of the first row for image number 22 on the image view server would be:
http://hostname/view-tile-cache-path/000022/V3J00001. GIF

In addition to the view tile position and view scale, other view attributes that may be encoded in the view tile storage location or in the view tile name. These attributes are view rotation angle, view x-mirror, view y-mirror, invert view. A view tile name with these extra view attributes can be encoded as:
V < SCALE > < TILE_NUMBER > < VIEW_ANGLE > < X_MIRROR > < Y_ MIRROR > < INVERT >. GIF

VIEW_ANGLE is of the form A < ANGLE >. X_MIRROR, Y_MIRROR, and INVERT are encoded by the single characters X, Y, and I respectively. An example is:
V3J00001A90XYI.GIF

The Web server 30 is configured to recognize the above-described specially formatted request Uniform Resource Locators (URL) to be handled by the image view server request broker 40. This is done by association of the request broker 40 with the URL path or with the document filename extension.

The foreground view composer 50 interprets the view request command 140 to determine what view needs to be composed. The view request may be absolute by defining scale and position, relative by defining scale and position as a delta to a previous view, or implied by relying on system defaults to select the view.

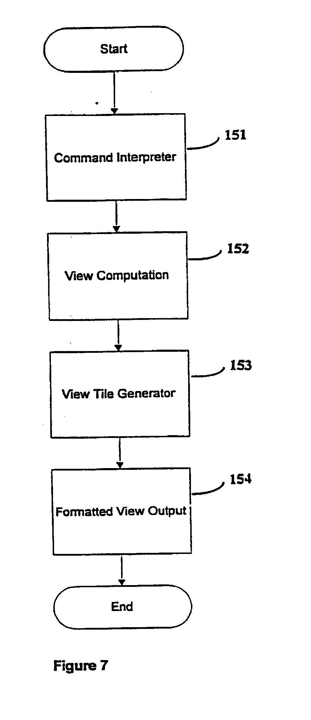

View computation software routine 150 is illustrated in FIG 7 wherein the command interpreter 151 takes the view request and determines 152 what scale view tile grid is needed for the view and what view tiles within the grid are needed for the view 150 (FIG. 2), and generates the view tile 153, resulting in formatted view output 154.

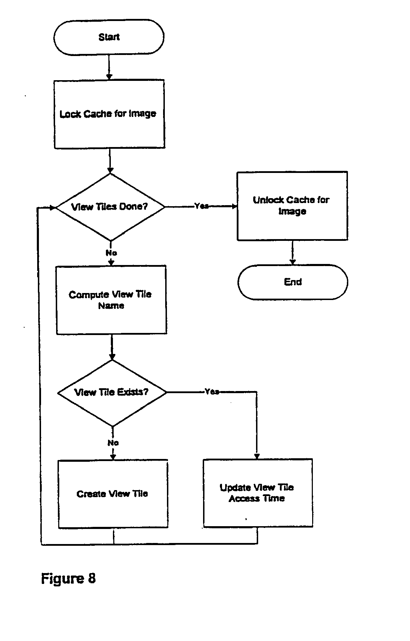

The view tile generator routine 160 performs the actual creation of the view tiles according to the preferred steps shown in FIG 8. The view tile generator receives information from the view computation as to what view tiles are needed for the view. It has access to records in the cache 60 that determine which tiles have already been created and are resident in the cache. If a needed view tile is in the cache then its last access time is updated to prevent the cache garbage collector from deleting the view tile. If a needed view tile is not in the cache, then the view tile generator creates the view tile from the image file 90. The view tile generator uses a software imaging library that supports rendering many digital document file formats including monochrome raster images, gray scale raster images, color raster images as well as many content rich non-raster formats such as Adobe Portable Document Format (PDF), PostScript, HPGL, etc. When rendering monochrome image data the imaging library scale-to-gray scaling is used to provide a more visually appealing rendition of the reduced image.

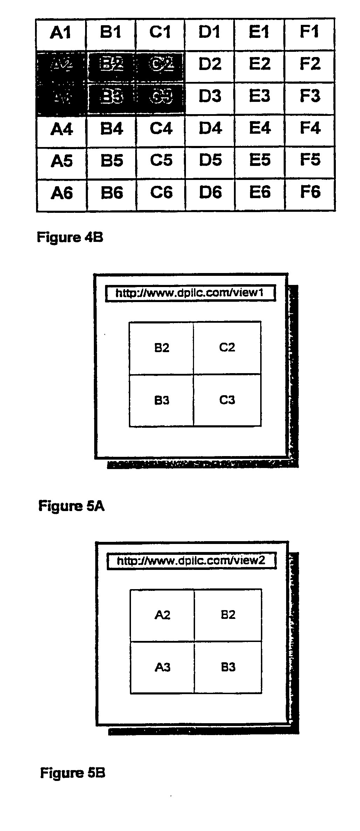

For example, a specific view request might include tiles B2, C2, B3, and C3 (FIG 4A and FIG 5A). If, after viewing those tiles, the client decides that the view to the immediate left is desired, then the server would send tiles A2 and A3 (FIG 4B and FIG 5B). This assumes that the client retains in a cache the other tiles. If the client does not cache then tiles A2, A3, B2, and B3 are sent.

Formatted output is created 170 to reference the view tiles needed to display the completed view. The formatted output uses HTML to describe the order, position and hyperlink for each view tile to be displayed. The output formatter applies another optimization by detecting white view tiles and replacing the hyperlink for the image specific white tile with a common white tile reference. This eliminates transmission of all but one white tile and eliminates the need to transmit any white tiles once the common white tile is cached by the Web browser.

The foreground view composer 50 controls the background view composer 80 by stopping it when a foreground view is being composed and then starting it with information about the newest view, once the new view has been composed 180.

Preferably, the background view composer 80 is programmed to optimize performance of the system by pre-computing, i.e., composing, view tiles that may be needed between view requests to the server. The tiles to be pre-computed are the tiles surrounding the most recent view and with the same scale as the most recent view. The order of view tile pre-computation is a clock-wise spiral out from the most recent view. The number of view tiles pre-computed around a view are preferably limited by a system configuration parameter to prevent useless creation of view tiles that may never be needed. Once the maximum number of pre-computed view tiles is reached for the most recent view scale, the pre-computation can proceed for alternate view scales. The background view composer preferably is programmed to work at a low priority to minimize interference with more critical system tasks.

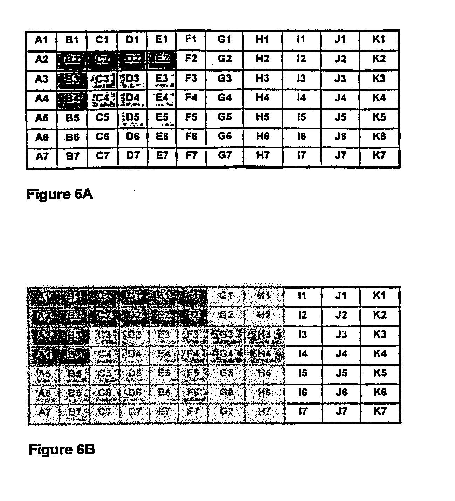

FIG 6A illustrates how the background view composer algorithm works. Assuming that for a given view requested by the client, tiles C3, C4, D3 and D4 are delivered, after those tile are delivered to the Web browser, the background view composer routine within the server program creates the tiles around these tiles, starting at E4, by composing or computing such surrounding tiles. As long as the client continues to view this page at this scale factor, the server will compute view tiles expanding outward from the tiles requested last. FIG 6B illustrates another request made by a client, after the two rotations of tiles were generated. The request asked for tiles G3, G4, H3, and H4. When the tile pre-computation begins for this request it will create tiles G5, H5, I5, I4, I3, I2, H2, and G2 in the first rotation, but it will not attempt to create tiles in the F column.

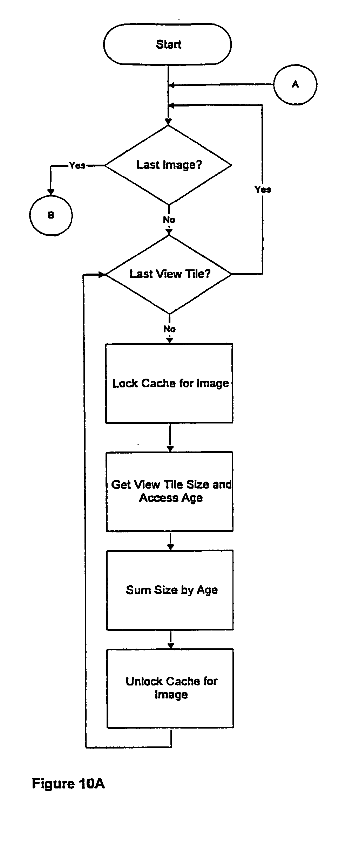

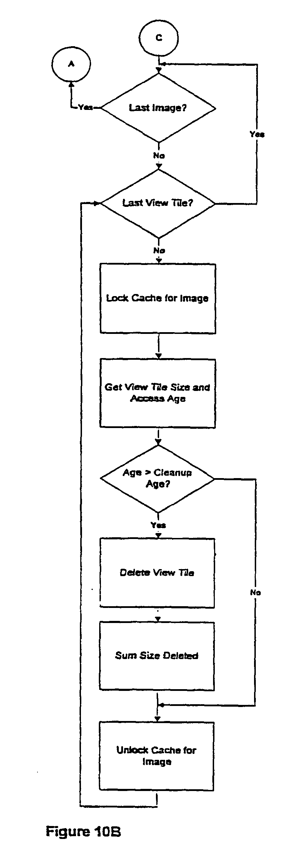

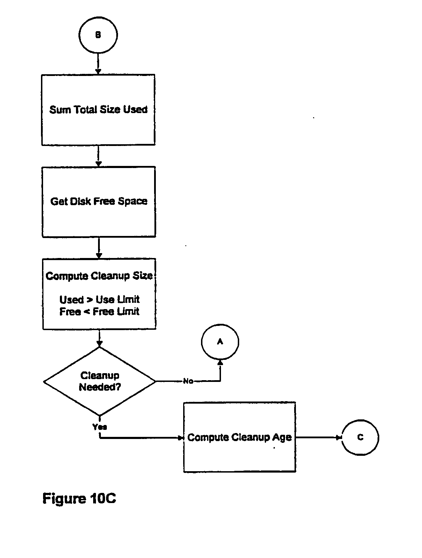

Preferably a view tile cache garbage collector algorithm 70 manages the use of the storage for view tiles (FIGS 10A, 10B, 10C). The garbage collector maintains the view tile cache 60 (FIG. 1) to keep the view tile cache storage usage below a storage limit and to keep the storage free space above a free space limit. The garbage collector constantly scans the cache to accumulate size and age statistics for the view tiles. When the cache size needs to be reduced, the garbage collector selects the least recently accessed view tiles for deletion until the cache size is within limits. The garbage collector runs at a low priority to minimize interference with more critical system tasks. The storage free space limit is designed as a fail-safe limit to prevent the system from running out of storage. The free space limit is checked on a periodic basis and if it is exceeded the garbage collector becomes a critical system task and runs at a high priority until the storage free space is greater than the free space limit.

Digital document files may be stored on the web server or on another server within the network. The image files are typically managed as digital documents with attribute information that is stored with the documents in the document repository 90. A digital document management system can run independently or in conjunction with the image view server software. The digital document file may be a raster image file or a non-raster document file. If the digital document file is a non-raster format then it is rendered as a monochrome, grayscale, or color raster image for viewing.

The graphical Web browser on the client workstation 10 receives HTML data from the image view server 210 that contains hyperlinks to the view tiles within the view tile cache 60 to be displayed and formatting that describes the layout of the of the tiles to form the image view. The Web browser initially must fetch each view tile 220 for a view from the view server. After the initial view, whenever a view overlaps with a previous view at the same scale, the Web browser preferably retrieves view tiles that have been previously displayed from the Web browser's local cache 210 rather than from the server.

Performance and usability of document viewing can be increased by using progressive display of tiled images. By using an image file format that allows a rough view of the image to be displayed while the remainder of the image content is downloaded, a rough view of the document can be seen more quickly.

Since most Web browsers can only transfer 1 to 4 GIF images at a time, usually not all of the view tiles in the view array can be progressively displayed at the same time. Therefore, it is preferred that to implement progressive display, algorithms at the client are provided to accept an alternate data format that would allow the whole document viewing area screen to take advantage of the progressive display while still taking advantage of the benefits of tiling and caching at the client. This can be accomplished in a Web browser environment using algorithms written in Java, JavaScript, or ActiveX technologies. By using client software to enhance the client viewer, additional enhancements to performance can be made by using alternate view tile image formats and image compression algorithms. A significant example would be to use the Portable Network Graphics (PNG) format with the optimization of having the image view server and client transfer only one image header common to be shared by all view tiles and then sending the low-resolution compressed image data for each view tile followed by the full-resolution image data for each view tile.

In addition to displaying the view tile array for the requested view, the HTML data can include hyperlinks used to form a tool bar that provide the user with a way to send requests to the server to change the current view by increasing or decreasing the view scale, shifting the view area, or changing the view size. Such hyperlinks would reference the current view and also contain operation codes that direct the image view server to compose a new view based on the hyperlink selected by the user.

The method, apparatus, and software article of the invention provide an improved client-server architecture using a graphical Web browser to access the image view server which makes efficient use of the network. By using image tiling and caching according to the preferred method, relatively small amounts of data need to be transmitted when the user selects a new view of an image already received and viewed. The server sends the requested image in the request format to the workstation and then allows viewing the image from the local copy of the image file. The image view server provides a better solution by utilizing lower cost graphical Web browsers for the workstations to access a network image view server that provides views of the image that can be displayed on the workstation by the graphical Web browser. For example an E-size engineering drawing raster image file is 8 million bytes in size when imaged in monochrome at 200 pixels-per-inch. With commonly used data compression the image file can be reduced to 250 kilobytes. With a low bandwidth 28.8 kilobaud modem network connection with approximately 3 kilobytes-per-second throughput, it 83 seconds (250 KB / 3 KB/second) to transfer the image file to the workstation application for viewing. With the image view server only the image data to be displayed needs to be transmitted. A typical view size of 896 by 512 pixels is made up of a 7 by 4 array of 128 pixel x 128 pixel view tiles. The monochrome view tiles are transmitted in a compressed format that typically yields tiles that are 512 bytes each so the entire view is approximately 14 kilobytes (0.5 KB x 28 tiles) and the transfer takes approximately 4.8 seconds (14 KB / 3 KB/second). This method of image viewing provides better response to the user with much lower demand on the network connection. A local-area-network typically utilizes a 10 megabit-per-second media so the savings from the efficiency of the image view server does not seem obvious. However, if the 10 megabit-per-second network is shared by 100 users, then the average bandwidth per user is only about 12.5 kilobytes-per-second so the efficiency of the image view server is still a benefit. Another benefit of the image view server is that the data transfer size remains constant even if the size of the view image is increased. If the image file size was 4 times larger than with the previous example as may be the case with a larger image, a higher resolution image or a less compressible image then the network load by the image view server would remain unchanged while network load of the traditional image viewer would quadruple.
The invention lowers the software purchase costs since a graphical Web browser is a common workstation that is inexpensive and the expense for the Web browsers is often a cost that is required for the workstation for other purposes and in many cases is included with the workstation operating system. The costs for the server software can be shared over hundreds of client workstations.
The software administrative cost is reduced by using the graphical Web browser that is a common workstation application that is already being administered, by eliminating an additional proprietary workstation software application, and by using server software that only needs to be administered on a central server rather than for each workstation.
The graphical Web browser is available on all common workstation types as well other devices such as notebook computers, palm-top computers, Network Computers and Web television adapters to provide a widely available solution.

## Claims

1. Computer network server (100) adapted to store digital document image files,
- said computer network server (100) being programmed with Web server software
- to receive requests from a client Web browser (10, 20) in URL code, wherein the URL code identifies the image file to be viewed, the scale of the view and the region of the image to view,
- to compose the requested view, and
- to transmit HTML code for the resultant view to the client Web browser (10, 20) to display;
- said computer network server (100) comprising a foreground view composer (50), which is adapted
- to interpret the view request received from the client Web browser (10, 20),
- to determine a grid of view tiles of the image according to the requested scale of the view,
- to determine an array of view tiles which are needed for the requested view, wherein the array of view tiles is selected from the grid of view tiles,
- to create the view tiles (160) needed for the requested view, wherein the foreground view composer (50) takes the needed view tiles from a cache (60) or creates the needed view tiles from the image file (90), and
- to create an HTML output file, wherein the HTML output file references the view tiles needed to display the completed view and describes the order, position and hyperlink for each view tile to be displayed.

2. Computer network server (100) according to claim 1, wherein the computer network server (100) is programmed with a background view composer (80) adapted to compute and cache, during periods between view requests, view tiles which surround the most recent view request in the same scale as the most recent view, so that when a new, shifted view is subsequently requested, the server program computes which of the resultant cached surrounding view tiles can be used in response to the request for shifted view, and composes a view which comprises one or more of the cached view tiles.

3. Computer network server (100) according to claim 2, wherein the surrounding view tiles are computed by the background view composer (80) in a clock-wise or counterclockwise spiral out from the most recent view.

4. Computer network server (100) according to claim 1 wherein the computer network server (100) is programmed with a view tile cache garbage collector (70) adapted to remove the least recently accessed view tiles when maximum storage allocation or minimum storage free space limits are reached.

## Patentansprüche

1. Computernetzwerk-Server (100), der angepasst ist, um Digitaldokument-Bilddateien zu speichern,
- wobei der Computernetzwerk-Server (100) programmiert ist mit Web-Server-Software,
- um von einem Client-Web-Browser (10, 20) Anforderungen in URL-Code zu empfangen, wobei der URL-Code die zu betrachtende Bilddatei, den Betrachtungsmaßstab und den zu betrachtenden Bereich des Bildes identifiziert,
- um das angeforderte Bild zusammen zu setzen, und
- um HTML-Code für das resultierende Bild zur Darstellung an den Client-Web-Browser (10, 20) zu übertragen;
- wobei der Computernetzwerk-Server (100) einen Vordergrund-Bildzusammensetzer (50) aufweist, der angepasst ist,
- um die von dem Client-Web-Browser (10, 20) empfangene Bildanforderung zu interpretieren,
- um ein Raster von Bildkacheln des Bildes entsprechend dem angeforderten Betrachtungsmaßstab zu bestimmen,
- um ein Feld von Bildkacheln zu bestimmen, die für das angeforderte Bild benötigt werden, wobei das Feld von Bildkacheln ausgewählt wird aus dem Raster von Bildkacheln,
- um die für das angeforderte Bild benötigten Bildkacheln (160) zu erzeugen, wobei der Vordergrund-Bildzusammensetzer (50) die benötigten Bildkacheln aus einem Cache (60) entnimmt oder die benötigten Bildkacheln aus der Bilddatei (90) erzeugt, und
- um eine HTML-Ausgabedatei zu erzeugen, wobei die HTML-Ausgabedatei die zur Darstellung des vervollständigten Bildes benötigen Bildkacheln referenziert und die Reihenfolge, die Position und einen Hyperlink für jede darzustellende Bildkachel beschreibt.

2. Computernetzwerk-Server (100) gemäß Anspruch 1, wobei der Computernetzwerk-Server (100) programmiert ist mit einem Hintergrund-Bildzusammensetzer (80), der angepasst ist, um während Zeiträumen zwischen zwei Bildanforderungen Bildkacheln zu berechnen und zwischen zu speichern, welche die letzte Bildanforderung in demselben Maßstab wie bei dem letzten Bild umgeben, sodass bei einer anschließenden Anforderung eines neuen, verschobenen Bildes das Serverprogramm berechnet, welche der resultierenden, zwischengespeicherten, umgebenden Bildkacheln als Antwort auf die Anforderung des verschobenen Bildes verwendet werden kann, und ein Bild zusammensetzt, das eine oder mehrere der zwischengespeicherten Bildkacheln aufweist.

3. Computernetzwerk-Server (100) gemäß Anspruch 2, wobei die umgebenden Bildkacheln von dem Hintergrund-Bildzusammensetzer (80) ausgehend von dem letzten Bild spiralförmig im Uhrzeigersinn oder entgegen dem Uhrzeigersinn berechnet werden.

4. Computernetzwerk-Server (100) gemäß Anspruch 1, wobei der Computernetzwerk-Server (100) programmiert ist mit einem Bildkachel-Zwischenspeicher-Müllsammler (70), der angepasst ist, um die Bildkacheln zu entfernen, auf die am wenigsten kürzlich zugegriffen wurde, wenn Grenzen erreicht sind für die maximale Speicherbelegung oder den minimalen freien Speicherplatz.

## Revendications

1. Serveur de réseau informatique (100) adapté pour stocker des fichiers d'image de document numérique,
- ledit serveur de réseau informatique (100) étant programmé avec un logiciel de serveur Web pour :
- recevoir des demandes d'un navigateur Web client (10, 20) dans un code URL, le code URL identifiant le fichier d'image devant être visualisé, l'échelle de la visualisation et la région de l'image à visualiser,
- composer la visualisation demandée, et
- transmettre un code HTML pour la visualisation résultante au navigateur Web client (10, 20) à des fins d'affichage ;
- ledit serveur de réseau informatique (100) comprenant un composeur de visualisation d'avant-plan (50) qui est adapté pour :
- interpréter la demande de visualisation reçue du navigateur Web client (10, 20),
- déterminer une grille de visualisations en mosaïque de l'image selon l'échelle demandée de la visualisation,
- déterminer un tableau de visualisations en mosaïque qui sont nécessaires pour la visualisation demandée, le tableau de visualisations en mosaïque étant sélectionné à partir de la grille de visualisations en mosaïque,
- créer les visualisations en mosaïque (160) nécessaires pour la visualisation demandée, le composeur de visualisation d'avant-plan (50) prenant les visualisations en mosaïque nécessaires dans une antémémoire (60) ou créant les visualisations en mosaïque nécessaires à partir du fichier d'image (90), et
- créer un fichier de sortie HTML, le fichier de sortie HTML faisant référence aux visualisations en mosaïque nécessaires pour afficher la visualisation accomplie et décrivant l'ordre, la position et l'hyperlien pour chaque visualisation en mosaïque à afficher.

2. Serveur de réseau informatique (100) selon la revendication 1, le serveur de réseau informatique (100) étant programmé avec un composeur de visualisation d'arrière-plan (80) adapté pour calculer et mettre en antémémoire, durant des périodes entre des demandes de visualisation, des visualisations en mosaïque qui entourent la demande de visualisation la plus récente à la même échelle que la visualisation la plus récente de sorte que, lorsqu'une nouvelle visualisation décalée est demandée par la suite, le programme de serveur calcule laquelle des visualisations en mosaïque environnantes mises en antémémoire résultantes peut être utilisée en réponse à la demande de la visualisation décalée et compose une visualisation qui comprend une ou plusieurs des visualisations en mosaïque mises en antémémoire.

3. Serveur de réseau informatique (100) selon la revendication 2, les visualisations en mosaïque environnantes étant calculées par le composeur de visualisation d'arrière-plan (80) dans une spirale tournant en sens horaire ou en sens antihoraire à partir de la visualisation la plus récente.

4. Serveur de réseau informatique (100) selon la revendication 1, le serveur de réseau informatique (100) étant programmé avec un nettoyeur d'antémémoire de visualisations en mosaïque (70) adapté pour supprimer les visualisations en mosaïque auxquelles on a accédé le moins récemment lorsque l'allocation de stockage maximal ou les limites d'espace libre de stockage minimal sont atteintes.
